Europäisches Patentamt

European Patent Office

Office européen des brevets

(19)

(11) **EP 1 211 939 B1**

(12) **EUROPEAN PATENT SPECIFICATION**

(45) Date of publication and mention
of the grant of the patent:
**03.12.2003  Bulletin 2003/49**

(51) Int Cl.[7]: **A01N 43/16**
// A01N43:16, A01N25:04

(21) Application number: **00959049.8**

(22) Date of filing: **12.09.2000**

(86) International application number:
**PCT/PL00/00060**

(87) International publication number:
**WO 01/019187 (22.03.2001 Gazette 2001/12)**

(54) **AGENT FOR PROTECTING PLANTS AGAINST DISEASES**

MITTEL ZUR BEHANDLUNG VON PFLANZEN GEGEN KRANKHEITEN

AGENT PROTEGEANT LES PLANTES CONTRE LES MALADIES

(84) Designated Contracting States:
**AT BE CH CY DE DK ES FI FR GB GR IE IT LI LU
MC NL PT SE**

(30) Priority: **14.09.1999  PL  33545499**

(43) Date of publication of application:
**12.06.2002  Bulletin 2002/24**

(73) Proprietors:
• **Instytut Wlokien Chemicznych
90-570 Lodz (PL)**
• **Instytut Ochrony Roslin
60-318 Poznan (PL)**
• **Instytut Sadownictwa I Kwiaciarstwa
96-100 Skierniewice (PL)**

(72) Inventors:
• **STRUSZCZYK, Henryk
PL-95-100 Zgierz (PL)**
• **NIEKRASZEWICZ, Antoni;
PL-91-157 Lodz (PL)**
• **WISNIEWSKA-WRONA, Maria;
PL-91-020 Lodz (PL)**
• **URBANOWSKI, Alojzy
PL-92-015 Lodz (PL)**
• **POSPIESZNY, Henryk
PL-60-194 Poznan (PL)**
• **ORLIKOWSKI, Leszek
PL-96-100 Skierniewice (PL)**
• **WOJDYLA, Adam
PL-96-100 Skierniewice (PL)**
• **SKRZYPCZAK, Czeslaw
PL-96-100 Skierniewice (PL)**

(74) Representative: **Brandenburg, Thomas et al
Brandenburg, Dunkelberg & Franke
Postfach 1218
53759 Hennef (DE)**

(56) References cited:
**WO-A-00/02541          WO-A-00/59949
WO-A-89/01288          WO-A-97/09879
US-A- 5 374 627**

• **PATENT ABSTRACTS OF JAPAN vol. 0153, no.
41 (C-0863), 29 August 1991 (1991-08-29) & JP 03
133909 A (TAIYO), 7 June 1991 (1991-06-07)**
• **DATABASE BIOSIS [Online] BIOSCIENCES
INFORMATION SERVICE, PHILADELPHIA, PA,
US; A.T.WOJDYLA ET AL.: "Effectiveness of
chitosan in the control of Sphaerotheca pannosa
var. Rosae and Peronospora sparsa on roses
and Myrothecium roridum on dieffenbachia"
retrieved from EPOQUE, accession no.
PREV199799429108 XP002155788 &
MEDEDELINGEN FACULTEIT
LANDBOUWKUNDIGE AN TOEGEPASTE
BIOLOGISCHE WETEMSCHAPEN
UNIVERSITEIT GENT, vol. 61, no. 2A, 1996,
pages 461-464,**
• **DATABASE WPI Section Ch, Week 199216
Derwent Publications Ltd., London, GB; Class
C03, AN 1992-127227 XP002155789 & JP 04
069305 A (INOUE T), 4 March 1992 (1992-03-04)**
• **DATABASE WPI Section Ch, Week 199304
Derwent Publications Ltd., London, GB; Class
C03, AN 1993-032634 XP002155790 & JP 04
360806 A (YOKOYAMA M), 14 December 1992
(1992-12-14)**

**Description**

The subject of the invention is an agent for protecting plant against diseases. From the publications in "Acta Horticulture" vol. 273 p. 383-389, 1990, the monograph "Five Blights of Pomoidea" EUR 12601 p. 273, 1900 and Plant Pathogenic Bacteria INRA p. 853-866, 1991 several substances and compounds like antibiotics, plant extracts, organic acids, heavy metals and fungicides are well-know which were tested in the protection of plants against pathogenic bacteria, however, without distinct effects. Presently the controlling of bacterial plant diseases is confined to phytosanitary interventions.

In some cases copper salts and antibiotics like streptomycin and kasugamycin are selectively used against bacterial plant diseases. All such agents are only preventives and should be used before the appearance of the bacterial infection. None of the agents is full effective in dozes harmless to the environment. The agents usually act directly on the bacteria. Only the copper salts agents can, to some extent, induce plant immunity. The well-known substances for protecting plant against bacterial diseases have several shortages: they are not effective, they' cannot be applied for a wide range of plants, are not safe for the environment, induce immunity of the pathogens and do not induce a natural immunity of the plants.

From the Polish Patent Application P. 324094 a bioagent is well-know for protecting plants against bacterial diseases in form of an aqueous suspension of microcrystalline chitosan (MCCh) containing of 0.001-10% of MCCh with average molecular weight not lower than 2000 Daltons, preferably 10000-30000 Daltons, water retention value not lower than 100%, deacetylation degree not lower than 65%, average particle size 1-100 μm characterized by active biological inhibition of the growth of bacterial plant pathogens resulting from the direct effect on the pathogens and induction of a natural plant immunity. Considering the suspension form, the practical use of the agent is limited and, besides, the particle size in the suspension influences negatively the protective efficiency of the agent.

In following publications "Experimental Mycology" vol. 3, p 285-287, 1979, "Physiological and Molecular Plant Pathology", vol. 41, p. 33-52, 1992, "Phytopathology", vol. 84 p. 312-320, 1994, "Molecular Plant - Microbe Interactions", vol. 7 p. 531-533, 1994, "Experimental Mycology", vol. 8 p. 276-281, 1984 and "Physiological Plant Pathology", vol. 84, p.119-123, 1982, the use of initial chitosan is described as elicitor or protective agent against fungal diseases like Fusarium solani, Capsicum annum, Catharanthus roseus, Aphanomyces enteiches. The initial chitosan was applied in the form of aqueous solutions in acides. Well-known agents, based on chitosan, considering formulation, can exert phytotoxic actions in case of plants. They insufficiently affect fungal diseases in vivo. Because of their form they selectively affect pathogenic fungi and do not demonstrate a controlled effect on fungi in vivo. The possibility of a simultaneous effect on various fungi strains is lacking.

From the monograph " Nauka o chorobach roslin" (Plant Diseases Science) - Panstwowe Wydawnictwo Rolnictwa i Lesnictwa (National Publication of Agriculture and Forestry) Warsaw 1987 and from following publications: "Fitopatologia" (Phytopathology) - Panstwowe Wydawnictwo Rolnictwa i Lesnictwa, Warsaw 1967, "Ochrona roslin" (Plant Protection) - Panstwowe Wydawnictwo Rolnictwa i Lesnictwa, Warsaw 1978 and "Podstawy praktycznej ochrony roslin" (Fundaments of practical plant protection) Wydawnictwo Akademii Rolniczej (Publications of the Academy of Agriculture), Lublin 1980 the methods are well-known to control fungi plant diseases by means of synthetic fungicides. Synthetic agents for plant protection are toxic for the environment and people. Besides, they are not capable to simultaneously control several strains of fungi. The application of synthetic pesticides results in acquiring antipesticide immunity by the pathogones in short time. Biocides with effective wide action against fungal diseases are presently not known.

From the Polish Patent Application P. 324095 a bioagent is well-know for protecting plants against fungal diseases in the form of an aqueous suspension containing 0.001-10% of MCCh with average molecular weight not lower than 1000 Daltons, water retention value not lower than 100%, deacetylation degree not lower than 65%, average particle size in the suspension 1-100 μm, demonstrating an ability to inhibit the growth of fungal pathogens occurring in the soil and/or on the plants by direct influencing the pathogenetic factor and inducing a natural immunity of the plants. Considering the suspension form, the practical use of the agent is limited and besides, the particle size in the suspension negatively influences the protective efficiency of the agent.

From the Polish Patent P. 269984 and P. 269985 a method is well-know for limiting the viral infection of plants. The method consists in applying chitosan on the plants before the viral infection caused by mechanical transfer of the viruses. The applied chitosan is either in solution in organic acids with the chitosan concentration being 0.005-0.1% and average molecular weight of chitosan 5000-2000000 Daltons or as a suspension of MCCh in water or organic solvents containing 0.005-0.1% of the polymer with water retention value 100-500%. The application of the chitosan solution in organic acids is not convenient, considering acidity and phytotoxic influence on the plants and the waterwashing of the chitosan salts. The application of MCCh is limited, considering its suspension form and particle size.

From the WO 97 09879 a formulation and procedure to increase resistance of plants to pathogens and environmental stress using acidic solution of chitosan characterized by polymer viscosity from about 150cps to 450cps and deacetylation degree from 50 to 80% is well-known. Several aq. solution of acids like acetic, adipic, citric, formic, lactic, malic, oxalic, piruvic and tartaric were used for dissolving of chitosan whereas this solution was adjusted with a base like sodium and potassium hydroxide or sodium carbonate.

From the US Patent 5,374,627 the method for protecting vegetables, turfgrass, rice and fruit trees from fungi and bacteria using a composition consisting chitosan hydrolyzate solution in aq. acetic acid is well-known. The chitosan hydrolyzate was obtained by acidic or enzymatic hydrolysis of chitosan.

From the abstract of Japanese Patent JP 03 133909 A the production of plant growth promotes as a chitosan solution by dissolving of chitosan in lactic solution and adjusting of pH by potassium lactate and potassium hydroxide is well-known.

In following publications in Mededelingen Faculteit Landbouwkundige an Toegepaste Biologische Wetemschapen Universiteit Gent, vol. 61, no 2A, 1996, pages 461-464 the microcrystalline chitosan dispersion with different average molecular weight used for control of Sphaerotheca pannosa Var-Rosae, Peronospora sparsa on roses and Myrothecium roridum on differbachia is well-known. The microcrystalline chitosan may induce the resistance reaction in invaded plants.

From the international publication WO 89 01288 a method for treating cereal crop seed with chitosan solution in aq. diluted organic or inorganic acids and adjusted pH is well-known.

From the abstract of Japanese Patent JP 04 069305 A the lawn protect contain low molecular weight chitosan effect Rhizoctonia species by solution of chitosan with pH=5.0-6.5 obtained by dissolving of initial chitosan in peracetic acid caused its strong degradation at 60°C and precipitation of chitosan by alkalisation to pH=10.5 and purification by alcohol washing as well as secondary dissolving of obtained precipitate to solution form is well-known.

From the abstract of Japanese Patent JP 04 360806 A the agent to controll of diseases caused by Pellicularia filamentsa and Ceratobosidum cornigerum in a form of aqueous solution of chitosan powder is well-known. A chitosan powder is obtained by dissolving of initial chitosan in strong organic acids solvents such as acetic, lactic or citric with its strong degradation than the obtained very viscous solution is mixed with acetone to obtain a water soluble chitosan powder.

According to this invention, the agent for protecting plants against diseases is a gel of chitosan with pH from 6.3 to 7.0 containing not less than 0.001 wt% of chitosan with average molecular weight not lower than 10000 Daltons, preferably 20000-500000 Daltons, and deacetylation degree not lower than 65%, preferably 70-95%, characterized by biological activity to inhibit the growth of plant bacterial, fungal and viral pathogens. The agent may additionally contain water-soluble polymers like carboxymethylcellulose or methylcellulose in the quantity of 0.001 to 10 wt% to chitosan. These polymers support in the application of the gel on the plants.

In the agent according to the invention, a chitosan gel is preferably applied which is a product of its neutralisation of its aqueous solutions in organic and/or inorganic acids like lactic, citric, glutamin, acetic or hydrochloric acids. The agent, according to the invention, enables an ecological protection of plants against local and systemic viral infection and bacterial and fungal infections with a lasting effectiveness under changeable atmospheric conditions. The agent also protects the plants in industrial garden and field cultures. The agent allows to limit the viral infection even in those parts of the plants which were not directly covered with the agent. This is possible thanks to induction by the agent of a natural plant immunity against viral infection. An advantage of the agent is the very high immunity of the plants acquired at concentration as low as 0.001%.

The agent, according to the invention, is up the standards of an ideal bactericide and fungicide. It can be applied to a wide range of plants and is entirely safe for the environment, animals and people. The application of the agent in plant protection eliminates contaminations of the environment thanks to its natural origin and full biodegradability. The plants and fruits can be safely consumed few days after the treatment with the agent.

Another merit of the agent, according to the invention, is its higher biological activity in comparison to other well-known commercial agents including microcrystalline chitosan and solutions of the initial chitosan in aqueous acids. The agent, according to the invention, can be used in plant protection against viral, bacterial and fungal diseases. The agent, according to the invention, is in more detail illustrated with the following examples not limiting the extent of the invention.

Example 1.

Bean plants, after 12 days from sowing, were treated with gel form of chitosan acetate with pH=6.76, containing adequately 0.01 wt% and 0.001 wt% of chitosan, with average molecular weight $\overline{M}v$=504 kD and deacetylation degree DD=80.5%. The tested plants were washed with water after 2 days and, after drying, inoculated by mechanical rubbing the alfalfa mosaic virus ALMV with concentration of 5 $\mu g/cm^3$. Average number of infected necrosis as well as the degree of virus inhibition were estimated after 3 days from inoculation, in comparison to the reference bean plants not subjected to chitosan treatment. The obtained results are presented in Table 1.

Table 1.

| Gel form concentration ,% | Average number of necrosis at half of leave | Inhibition ,% |
|---|---|---|
| 0.01 | 1.1 | 99.3 |
| 0.001 | 1.0 | 99.5 |
| 0 (control) | 163.8 | - |

Example 2.

Bean plants were treated with gel form of chitosan acetate with pH=6.5, containing adequately 0.01 wt% and 0.001 wt% of chitosan, with $\overline{M}v$=70 kD and DD=73.4%. Inoculation of viruses was carried out as in Example 1. The obtained results are presented in Table 2.

Table 2.

| Gel form concentration ,% | Average number of necrosis at half of leave | Inhibition ,% |
|---|---|---|
| 0.01 | 1.1 | 99.3 |
| 0.001 | 2.5 | 98.5 |
| 0 (control) | 163.8 | - |

Example 3.

Bean plants were treated with a gel form of chitosan acetate, containing adequately 0.01 wt% and 0.001 wt% of chitosan, with $\overline{M}v$=70 kD and DD=87.6%. Inoculation of viruses was carried out as in Example 1. The results of test are presented in Table 3.

Table 3.

| Gel form concentration ,% | Average number of necrosis at half of leave | Inhibition ,% |
|---|---|---|
| 0.01 | 1.0 | 99.5 |
| 0.001 | 2.0 | 98.8 |
| 0 (control) | 163.8 | - |

Example 4.

Bean plants were treated with a gel form of chitosan lactate with pH=6.75, containing adequately 0.01 wt% and 0.001 wt% of chitosan, with $\overline{M}v$=150 kD and DD=73.4%. Virus inoculation was carried out as in Example 1. The test results are presented in Table 4.

Table 4.

| Gel form concentration ,% | Average number of necrosis at half of leave | Inhibition ,% |
|---|---|---|
| 0.01 | 3.5 | 97.9 |
| 0.001 | 4.0 | 97.5 |
| 0 (control) | 163.8 | - |

Example 5.

Bean plants were treated with a gel form of chitosan lactate with pH=6.75, containing adequately 0.01 wt% and 0.001 wt% of chitosan, with $\overline{M}v$=70 kD and DD=87.6%. Virus inoculation was carried out as in Example 1. The results are shown in Table 5.

Table 5.

| Gel form concentration ,% | Average number of necrosis at half of leave | Inhibition ,% |
|---|---|---|
| 0.01 | 0.1 | 99.9 |
| 0.001 | 1.0 | 99.5 |
| 0 (control) | 163.8 | - |

Example 6.

Bean plants were treated with a gel form of chitosan hydrochloride with pH=6.30 containing adequately 0.01 wt% and 0.001 wt% of chitosan with $\overline{M}$v=150 kD and DD=73.4%. Virus inoculation was carried out as in Example 1. The results of test are presented in Table 6.

Table 6.

| Gel form concentration ,% | Average number of necrosis at half of leave | Inhibition ,% |
|---|---|---|
| 0.01 | 3.3 | 98.0 |
| 0.001 | 3.5 | 97.9 |
| 0 (control) | 163.8 | - |

Example 7.

Gel forms of chitosan acetate with properties presented in Table 7 were estimated on their antibacterial activity using Pseudomonas syringae p.v. tomato bacteria on the agar-agar plates. Gel forms of chitosan acetate with concentration of 0.1 wt% were introduced on the plates with incubation time 48 h at 37°C. The results of in vitro test are presented in Table 7.

Table 7.

| Gel form properties | | | Inhibition ,% |
|---|---|---|---|
| $\overline{M}$v kD | DD % | pH | |
| 70 | 87.6 | 6.30 | 60 |
| 189 | 97.0 | 6.30 | 70 |
| 504 | 80.5 | 6.76 | 70 |

Example 8.

Gel forms of chitosan acetate with properties presented in Table 8 were tested in respect of their influence on the infection of tomato plants by Pseudomonas syringae p.v. tomato bacteria. Tomato plants were sprayed with 0.1 wt% of gel chitosan forms before bacteria infection. Inhibition of bacteria infection was estimated by comparing the amount of systemically infected plants, treated and untreated with gel forms of chitosan. The results are shown in Table 8.

Table 8.

| Gel form properties | | | Inhibition ,% |
|---|---|---|---|
| $\overline{M}$v kD | DD % | pH | |
| 150 | 73.4 | 6.50 | 85 |
| 189 | 97.0 | 6.30 | 70 |
| 504 | 80.0 | 6.76 | 85 |

Example 9.

Gel forms of chitosan hydrochloride (gel 1) with pH=6.60, $\overline{M}$v=70 kD and DD=87.6%, chitosan acetate (gel 2) with pH=6.76, $\overline{M}$v=504 kD and DD=80.5% as well as chitosan acetate (gel 3) with pH=6.30, $\overline{M}$v=70 kD and DD=87.6% were used at concentration of 0.1 wt% for the treatment of soil planted with Difenbachia, infected by the Myrothecium roridum fungi strain. The Bravo 500 SC fungicide with concentration of 0.2 wt% was also used as the control. Two variation of experiment were made: A - sprayed on a soil with chitosan gels 24 h before infection, and B - sprayed on a soil 24 h after infection. The results of necrosis estimation (in mm) are shown in Table 9.

Table 9.

| Agent type | A | | B | |
|---|---|---|---|---|
| | Estimation, after days | | | |
| | 5 | 7 | 5 | 7 |
| Control | 8.8 | 12.1 | 8.8 | 12.1 |
| Bravo 500 S.C. | 7.8 | 11.6 | 3.5 | 5.1 |
| Gel 1 | 8.4 | 11.9 | 2.0 | 3.5 |
| Gel 2 | 7.5 | 12.0 | 1.6 | 3.2 |
| Gel 3 | 7.4 | 11.2 | 1.9 | 3.6 |

Example 10.

Gel forms of chitosan as in Example 9 were used for protection against Sphaerotheca panhosa var. rosae on the rose plants of Mercedes strain cultivated in green house conditions. The gel forms of chitosan were used at concentration of 0.1 wt%. The Saprol fungicide agent at concentration of 0.15 wt% was also used as the control. The results of test after 2 chitosan treatments used at one week interval are presented in Table 10. A plant paralysis degree estimation: 0 - no disease effect, 1 - up to 1% of plant surface covered by fungi, 2 - 1.1 to 5%, 3 - 5.1 to 10%, 4 - 10.1 to 20%, 5 - more than 20% was adopted.

Table 10.

| Agent type | Paralysis degree |
|---|---|
| Control | 5 .0 |
| Saprol | 4.0 |
| Gel 1 | 3.5 |
| Gel 2 | 3.3 |
| Gel 3 | 3.3 |

Example 11.

Bean plants after 12 days from sowing were treated with gel form of chitosan lactate with pH=6.75 containing 0.1 wt.% of chitosan with $\overline{M}$v=504 kD and DD=80.5% as well as 0.005% of sodium carboxymethylcellulose. The plants were then infected by AIMV viruses as in Example 1. The results of test are presented in Table 11.

Table 11.

| Gel form concentration ,% | Average number of necrosis at half of leave | Inhibition ,% |
|---|---|---|
| 0.1 | 1.0 | 99.5 |
| 0 (control) | 163.8 | - |

**Claims**

**1.** An agent for protecting plants against diseases, having a biological activity to inhibit the growth of plant bacterial, fungal and viral pathogens, based on chitosan **characterized in that** it constitutes a chitosan gel with pH in the range of 6.3 to 7.0, containing not less than 0.001 wt% of chitosan with an average molecular degree not lower than 10 000 Daltons, and a deacetylation degree not lower than 65%, with a possible addition of water-soluble polymers in the quantity of 0.001 to 10 wt% to chitosan.

**2.** An agent according to Claim 1 **characterized in that** a chitosan gel is used which is obtainable by the neutralization of its aqueous solutions in organic and/or inorganic acids like lactic-, citric-, glutamin-, acetic-, hydrochloric acid.

**Patentansprüche**

**1.** Ein Mittel zum Schutz von Pflanzen gegen Krankheiten, aufweisend eine biologische Aktivität zur Inhibierung des Wachstums von bakteriellen, pilzlichen oder viralen Pflanzenkrankheitserregern, basierend auf Chitosan, **gekennzeichnet durch** das Bilden eines Chitosangels mit einem pH im Bereich von 6,3 bis 7,0, enthaltend nicht weniger als 0,001 Gew.-% an Chitosan mit einem durchschnittlichen Molekulargrad von nicht weniger als 10.000 Dalton und einem Deacetylierungsgrad von nicht weniger als 65% sowie einer möglichen Zugabe von wasserlöslichen Polymeren in der Menge von 0,001 bis 10 Gew.-% gegenüber dem Chitosan.

**2.** Mittel nach Anspruch 1, **dadurch gekennzeichnet, dass** ein Chitosangel verwendet wird, welches erhaltbar ist durch die Neutralisation von dessen wäßrigen Lösungen in organischen und/oder anorganischen Säuren wie Milchsäure, Zitronensäure, Glutaminsäure, Essigsäure, Salzsäure.

**Revendications**

**1.** Agent destiné à protéger des plantes contre des maladies, possédant une activité biologique pour inhiber la croissance de pathogènes de plantes, bactériens, fongiques et viraux sur la base de chitosan **caractérisé en ce qu'**il constitue un gel de chitosan avec un pH dans la gamme de 6, 3 à 7, 0 contenant non moins de 0,001 % en poids de chitosan avec un degré moléculaire moyen non inférieur à 10 000 Daltons, et un degré de désacétylation non inférieur à 65 %, avec une addition possible de polymères hydrosolubles dans la quantité de 0,001 à 10 % en poids de chitosan.

**2.** Agent selon la revendication 1, **caractérisé en ce qu'**un gel de chitosan est utilisé, qui peut être obtenu par la neutralisation de ses solutions aqueuses dans des acides organiques et/ou inorganiques comme les acides lactique, citrique, glutamine, acétique, chlorhydrique.